# EUROPEAN PATENT SPECIFICATION

(11) **EP 0 316 098 B1**
(45) Date of publication and mention of the grant of the patent: **27.04.1994**
(21) Application number: 88310216.2
(22) Date of filing: 31.10.1988
(51) Int. Cl.: B65H 31/30

(54) **Stacking equipment**
Stapelvorrichtung
Dispositif d'empilage

(30) Priority: 07.11.1987 GB 8726152
(43) Date of publication of application: 17.05.1989
(73) Proprietor: SCM CONTAINER MACHINERY LIMITED, Stockport, Cheshire, SK3 ORU (GB)
(72) Inventor: Clark, Alan, Sutton South Wirral (GB)
(74) Representative: Ajello, Michael John

(56) References cited:
- EP-A- 0 126 694
- WO-A-80/00829
- FR-A- 2 319 554
- FR-A- 2 506 276
- FR-A- 2 587 311
- GB-A- 1 404 426
- US-A- 4 540 325

## Description

THIS INVENTION relates to stacking equipment particularly, though not exclusively, for stacking products formed from corrugated board or other paper or board products (especially boxes or cartons in lay-flat form) on pallets.

Corrugated board is converted into cartons or boxes in lay-flat form with automatic machinery and stacks of such lay-flat products are discharged from an outlet conveyor. The discharged stacks can then be accumulated as larger stacks on pallets for convenience of transport and storage. The discharged stacks are commonly transferred to the pallets by hand but this can be arduous and inefficient.

European Patent Specification No. 0126694 describes apparatus for forming a stack of articles and including a receiving conveyor on which a batch of articles is collected, a main support device for supporting such batches at a stacking location, and transfer means for transferring the batches from the receiving conveyor to the main support device and for introducing each successive batch beneath a preceding transferred batch whereby a stack of the batches is formed on the main support means. The apparatus described in that document relies upon the articles of each batch being positioned exactly beneath the bounds of the stack as it is formed, no means being provided for squaring the articles in each batch or each batch in the stack.

An object of the present invention is to provide stacking equipment whereby transfer of products to a stacking location can be effected automatically in a convenient and efficient manner with each stack properly centralised over its pallet.

According to the present invention there is provided stacking equipment comprising receiving means for receiving and conveying products to be stacked, collecting means for collecting said conveyed products together in predetermined disposition in successive batches, a main support means for supporting such batches at a stacking location, and transfer means for transferring said batches from said collecting means to said main support means and for introducing each successive batch beneath a preceding transferred batch whereby a stack of said batches is formed on said main support means, characterised in that said collecting means includes at least two deflectors simultaneously movable towards and away from each other transversely of the conveying direction of the products to centralise the transverse disposition of an assembled batch of products before transfer to said main support means; and in that vertically disposed structures are provided above the main support means and simultaneously movable towards and away from each other in a direction parallel to the conveying direction of the products to centralise the longitudinal disposition of the stacked batches over the main support means so that transverse centering occurs over the collecting means, and longitudinal centering occurs over the main support means.

With this arrangement as a consequence of the collecting means which permits attainment of a predetermined product disposition, and as a consequence of the assembly of the resulting stack from below, it is possible to achieve a neat and stable stack in a particularly convenient and efficient manner.

The receiving means may comprise a conveyor, such as a roller conveyor, which may run continuously. Where the stacking equipment is used with product-producing automatic machinery, an input end of the receiving means may be arranged to receive products automatically from an output of the machinery.

The transfer means may comprise an auxiliary support means above the main support means in conjunction with mechanisms which act automatically to transfer each batch from the collecting means to the main support means and from there to the auxiliary support means beneath any batch already on the latter support means, the final assembly of stacked batches then being deposited from the auxiliary support means onto the main support means. The main support means and the auxiliary support means may be vertically movable one relative to the other for transfer of batches therebetween. The auxiliary support means may comprise retractable fingers which can be readily inserted beneath and retracted from batches on the main support means. Conveniently, the main support means may comprise a roller bed and the rollers may be arranged such that the above mentioned fingers fit therebetween.

The final assembly of stacked batches may be deposited on a pallet on the main support means and an automatic feed device may be provided for feeding the pallet onto the main support means prior to deposit of the stacked batches thereon.

The invention may find particular application in the stacking of corrugated board products. However the invention is not intended to be restricted to this context and the stacking equipment may be used for any suitable purpose.

The invention will now be described further by way of example only and with reference to the accompanying drawing in which:-
Fig. 1 is a diagrammatic plan view (with parts omitted for clarity) of one form of stacking equipment according to the invention; and

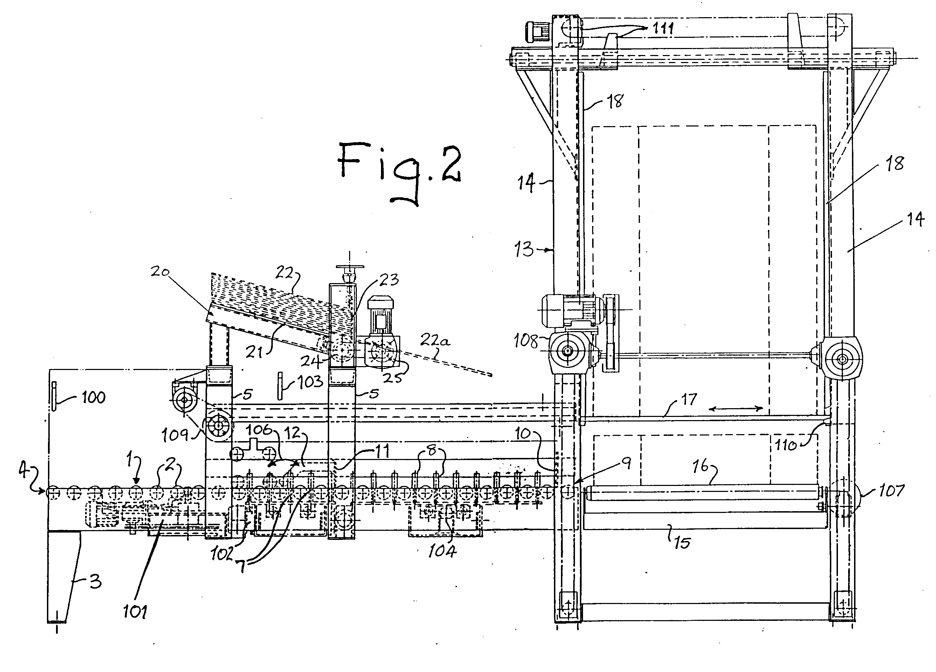

Fig. 2 is a diagrammatic side view (with parts omitted for clarity) of the equipment of Fig. 1.

The equipment shown in the drawings is for use in the automatic assembly of stacks of flat corrugated board products on pallets.

The equipment includes a receiving conveyor 1 comprising a horizontal bed of rollers 2 which can be continuously driven by an electric motor drive mechanism. The bed stands on adjustable legs 3 and has an inlet end 4 which can be arranged to receive products directly from an outlet end of product-producing machinery. The products delivered onto the conveyor 1 may be in the form of several superimposed corrugated board boxes or cartons in lay-flat form and the boxes or cartons may be loosely superimposed or may be tied together. A detector 100 is provided at the inlet end 4 of the conveyor 1 for detecting delivery of products onto the conveyor. The detector may be of the optical kind i.e. a light sensor receiving light from a source, such light being interrupted by the intrusion of delivery products.

The conveyor 1 is bounded at its sides by upstanding frames 5 and, near to the inlet end 4, there is a turntable 6 set into the roller bed. The turntable 6 is normally retracted beneath the roller bed but can be moved upwardly and can be rotated about a vertical axis with an automatic drive mechanism 101. In this way the products can be rotated through a predetermined angle as they pass along the conveyor 1.

Beyond the turntable 6 there are two sets of vertical push rods 7 respectively on opposite sides of the conveyor 1 and each set can be moved, between the conveyor rollers 2, across the conveyor 1 towards the other set, with an automatic drive mechanism 102. In this way the products can be shifted to either side of the conveyor 1. Adjacent each set of push rods 7 there is a detector 103 (e.g. an optical detector) for detecting the presence of products thereat.

Beyond the push rods 7 there are two deflectors 8 respectively on opposite sides of the conveyor 1 and these deflectors can be moved simultaneously towards each other, with an automatic pneumatic drive mechanism 104, between the conveyor rollers 2, to centralise products therebetween.

Slightly beyond the deflectors 8, at an outlet end 9 of the conveyor 1, there is a stop plate 10 which can be moved, by an automatic drive mechanism 105, between a retracted position in which it is below the roller bed, and an extended position at which it is above the roller bed and acts as an abutment for products on the conveyor 1.

In the central region of the conveyor 1 there is a push plate arrangement 11 mounted on pivotal arms 12 so that it can be moved, as illustrated by arrow 106, by an automatic drive mechanism, between an operational position in which it extends across the conveyor 1 slightly above the roller bed, and a retracted position at which it is above and well clear of the roller bed. In the operational position the push plate 11 can be moved along the conveyor 1 towards the stop plate 10.

The outlet end 9 of the conveyor 1 is arranged to discharge to one side of a vertical frame structure 13. The frame structure 13 has upright columns 14 and mounted therebetween near the bottom is a platform 15 having a bed of support rollers 16 which can be rotated with a drive motor 107. The axes of the rollers 16 are horizontal and perpendicular to the axes of the conveying rollers 2. The platform 15 can be moved, with a drive mechanism 108, between a lower position (as illustrated) level with the conveyor 1 and a higher position.

At this higher position there is a series of horizontal forks 17 extending parallel to each other along axes which are parallel to and vertically above the spaces between the rollers 16 of the platform 15. The forks 17 are movable, with an automatic drive mechanism 109, between an extended position at which they extend across the frame structure 13 to rest on supports 110, and a retracted position at which they are located over the conveyor 1 clear of the frame structure 13.

Between the forms 17 at opposite sides of the frame structure 13 there are two sets of vertically disposed structures in the form of fingers 18 and these can be moved simultaneously towards and away from each other with an automatic drive mechanism 111.

The various drive mechanisms and detectors so far described, and various limit switches (not yet described) associated with parts of the equipment, are all connected to a computer control unit 112 with which the desired operation of the equipment can be selected and automatically controlled. The control unit preferably has a VDU which produces a graphics display to assist the operator in selecting the desired orientation and mode of assembly of products on the conveyor.

Mounted above conveyor 1 on the upper end of vertical frame members 5 is a mechanism 20 for dispensing tie sheets. These are sheets of paper or cardboard of which one is placed on the top of each successive batch of products prior to delivery onto the rollers 16. Thus, tie sheets disposed between successive batches of products will assist in maintaining stability of the finished stack. This is particularly useful when the products consist of loosely tied bundles of lay-flat articles where each bundle is not necessarily of uniform height throughout its length and width.

The dispenser 20 comprises a supporting platform 21 on which a bundle of tie sheets 22 may be stored, and a vertically adjustable gate 23 forming a front wall against which the tie sheets lie. A friction roller 24 mounted beneath the leading edge of the lowermost sheet 22, and driven by motor 25, may serve to dispense a tie sheet as indicated at 22a onto the top of an accumulated batch of products on the conveyor 1.

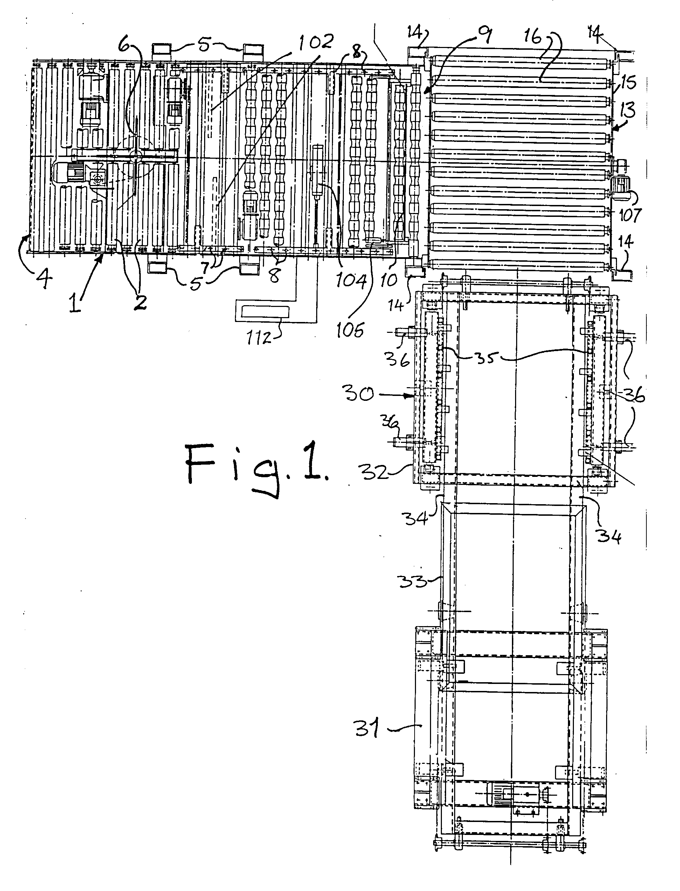

As can be seen in Fig. 1, a pallet dispenser generally indicated at 30 is preferably located adjacent one end of the bed of rollers 16 for the purpose of transferring a pallet onto the rollers 16 to be placed beneath a finished stack prior to the introduction of the next successive batch of products. The dispenser 30 comprises a first station 31 on which pallets may be stored in a stack, a second station 32 in which a stack of pallets may be supported, and a transfer platform 33 adapted to run along rails 34 to transfer stacks of pallets successively between stations 31 and 32.

Station 32 is equipped with retractable vertical side supports 35 which, by means of pneumatic cylinders 36, are movable towards one another to grip a stack of pallets. The vertical supports 35 extend downwardly to a position above the level of the height of a single pallet so that when a stack of pallets is supported by supports 35 the lowermost unsupported pallet may be advanced by platform 33 into an operative position on the bed of rollers 16. By successively manipulating vertical supports 35 and platform 33, pallets may be supplied beneath successive finished stacks of products. Supports 35 are also movable vertically to lower a stack of pallets on each occasion when the lowermost pallet is delivered onto rollers 16.

Typical operation of the equipment is as follows.

First the operator sets the control unit in accordance with a desired orientation and assembly of products in the final stack. That is, products (or small stacks of products) may be delivered to the receiving conveyor 1 with a fixed common orientation and one behind another, but the stacking requirement may be that the products should be arranged e.g. side-by-side facing in opposite directions, especially where the products are of non-uniform (tapered) thickness. Accordingly, it may be necessary to set the control unit to cause the equipment to turn and move sideways the products (in the manner described hereinafter).

The rollers 2 of the conveyor 1 are set in continuous motion and products are fed (manually or automatically) onto the inlet end 4 of the conveyor 1 along the centre line of the conveyor.

Using information derived from the roller speed and the time of actuation of the entry detector 100 by products delivered to the conveyor 1, the turntable 6 is activated to move up and engage a product when its centre is aligned with the turntable centre. The product is rotated through a desired angle and then the turntable 6 is retracted to deposit the product back on the conveyor 1.

As the rotated product moves between the sets of push rods 7 one set is activated to push the product to the opposite side until the product reaches and activates a detector at such side. The product is advanced to the end of the conveyor 1 where it is retained by engagement with the stop plate 10.

The next product is rotated by the turntable 6 in the opposite direction and pushed to the opposite side whereby the two products are then arranged side-by-side facing in opposite directions against the stop plate 10. Alternatively, one or more products may be centralised by simultaneous operation of both sets of push rods 7. The deflectors 8 then move towards each other in accordance with a timed sequence to centralise the transverse disposition of the assembled batch of products on the conveyor 1. This sequence may be repeated to form an accumulation of products as a batch on the conveyor 1.

Once a batch is completed a tie sheet is placed on its top surface as described above and then the stop plate 10 is retracted, the push plate 11 is lowered into the operational position behind the batch and is advanced to push the batch of products off the conveyor 1 onto the platform 15, such action terminating when a limit switch is engaged by the push plate 11. The push plate 11 is pivotted upwardly clear of the conveyor 1 and returned to its starting position, and the stop plate 10 is raised to lie above the roller bed of the conveyor 1.

With the fork 17 in their extended positions resting on supports 110, the platform 15 is moved upwardly until the forks 17 are engaged by the supported batch. A limit switch is thereby actuated, the forks 17 are retracted, the platform 15 is moved slightly higher to its uppermost position, and the forks 17 are again extended to pass between the rollers 16 and beneath the supported products to rest on supports 110.

Vertically disposed fingers 18 are then moved towards each other simultaneously until they engage the supported products (as detected by a limit switch) so as to squeeze slightly the products and thereby centralise the longitudinal disposition of the stacked batches over the main support rollers 16. The fingers 18 are then moved back.

The platform 15 descends to its lowermost position leaving the products supported on the forks 17.

The above procedure is repeated with successive batches of products. Each successive batch is transferred onto the forks 17 beneath the preceding assembly (or stack of assemblies). That is, when the supported products on the platform 15 are moved up into engagement with the forks 17, the forks 17 retract so as to drop onto the supported products, all those products which were already on the forks and the resulting increased stack is then transferred back to the forks 17.

When a stack of desired height has been assembled on the forks 17, the conveyor 1 is stopped, a pallet is positioned on the platform 15 (from the pallet dispenser 30), the platform 15 is raised, the forks 17 are retracted to deposit the stack onto the pallet, the platform 15 descends to its lowermost position, and the rollers 16 of the platform 15 are driven to discharge the palletised stack to a delivery conveyor or the like positioned opposite pallet dispenser 30.

With the embodiment described palletised stacks can be formed in a particularly convenient and efficient manner. Transverse centering of the batches is ensured by the action of deflectors 8 and longitudinal centering is ensured by the action of vertical fingers 18.

## Claims

1. Stacking equipment comprising receiving means (1) for receiving and conveying products to be stacked, collecting means (2,6,7,10) for collecting said conveyed products together in predetermined disposition in successive batches, a main support means (16) for supporting such batches at a stacking location, and transfer means (11,12) for transferring said batches from said collecting means (2,6,7,10) to said main support means (16) and for introducing each successive batch beneath a preceding transferred batch whereby a stack of said batches is formed on said main support means (16), characterised in that said collecting means (2,6,7,10) includes at least two deflectors (8) simultaneously movable towards and away from each other transversely of the conveying direction of the products to centralise the transverse disposition of an assembled batch of products before transfer to said main support means (16); and in that vertically disposed structures (18) are provided above the main support means (16) and simultaneously movable towards and away from each other in a direction parallel to the conveying direction of the products to centralise the longitudinal disposition of the stacked batches over the main support means (16) so that transverse centering occurs over the collecting means, and longitudinal centering occurs over the main support means (16).

2. Stacking equipment according to Claim 1, wherein the receiving means (1) comprises a driven conveyor (2) adapted and arranged to receive successive products to be assembled thereon into a batch and to be dispensed therefrom by said transfer means (11,12) onto said main support means (16).

3. Stacking equipment according to Claim 1 or Claim 2, wherein said collecting means (2,6,7,10) includes a movable stop plate (10) and a turntable (6) for setting the angular disposition of the products.

4. Stacking equipment according to any preceding claim, including an auxiliary support means (17) above the main support means (16), and mechanisms which act automatically to transfer each batch of products from the collecting means (2,6,7,10) to the main support means (16) and from there to the auxiliary support means (17) beneath any batch already disposed on the latter.

5. Stacking equipment according to Claim 4, wherein the main support means (16) and the auxiliary support means (17) are vertically movable one relative to the other for transfer of batches of products therebetween.

6. Stacking equipment according to Claim 4 or Claim 5, wherein the auxiliary support means (17) comprises a plurality of parallel retractable fingers adapted for insertion beneath and retraction from beneath one or more batches supported on the main support means (16).

7. Stacking equipment according to Claim 6, wherein the main support means (16) comprises a bed of parallel rollers, and the retractable fingers are aligned vertically with the spaces between the rollers.

8. Stacking equipment according to any preceding claim, including a pallet dispenser (30) disposed adjacent the main support means (16) and adapted to provide a store for a stack of pallets, and including means (33) for delivering pallets successively from said store to said main support means (16) for placing beneath a final stack of products.

9. Stacking equipment according to Claim 8, wherein said pallet dispenser (30) includes vertical members (35) for supporting respective opposite sides of a stack of pallets, and said delivery means (33) to transfer the lowermost pallet from beneath a stack thereof onto said main support means (16) whilst the stack of pallets thereabove is supported by said vertical members.

10. Stacking equipment according to any preceding claim, including a tie-sheet dispenser (20) comprising means for supporting a stack of tie-sheets (22) and means (25) for dispensing a sheet from the stack onto the top surface of an assembled batch of products prior to its transfer onto said main support means (16) whereby successive vertically adjacent batches of products within the stack thereon are interposed by a tie-sheet.

11. Stacking equipment according to Claim 10, wherein the tie-sheet dispenser (20) includes an adjustable control gate (23) to ensure that said sheets are fed one at a time from the dispenser.

12. Stacking equipment according to any preceding claim, including a plurality of detectors to determine the instantaneous position of a product or batch thereof within the equipment, and a computer control unit (112) connected to receive signals from said detectors and to actuate, in accordance with a predetermined time sequence, various drive mechanisms for the components of the equipment such that the desired operation of the equipment can be selected and automatically controlled.

## Patentansprüche

1. Stapelausrüstung mit einer Aufnahmeeinrichtung (1) zum Empfangen und Fördern von zu stapelnden Produkten, einer Sammeleinrichtung (2, 6, 7, 10) zum Zusammensammeln der geförderten Produkte in vorbestimmter Anordnung in aufeinanderfolgenden Partien, einer Haupttrageinrichtung (16) zum Tragen dieser Partien an einem Stapelort und einer Übergabeeinrichtung (11, 12) zum Übergeben der Partien von der Sammeleinrichtung (2, 6, 7, 10) an die Haupttrageinrichtung (16) und zum Einführen jeder folgenden Partie unter eine vorhergehende übergebene Partie, wodurch ein Stapel der Partien auf der Haupttrageinrichtung (16) gebildet wird, dadurch gekennzeichnet, daß die Sammeleinrichtung (2, 6, 7, 10) wenigstens zwei Ablenker (8) aufweist, die quer zu der Förderrichtung der Produkte gleichzeitig aufeinander zu und voneinander weg bewegbar sind, um die Queranordnung einer zusammengesetzten Partie von Produkten vor der Übergabe an die Haupttrageinrichtung (16) zu zentralisieren; und daß vertikal angeordnete Gebilde (18) oberhalb der Haupttrageinrichtung (16) vorgesehen und in einer zu der Förderrichtung der Produkte parallelen Richtung gleichzeitig aufeinander zu- und von einander wegbewegbar sind, um die Längsanordnung der gestapelten Partien über der Haupttrageinrichtung (16) zu zentralisieren, so daß eine Querzentrierung über der Sammeleinrichtung erfolgt und eine Längszentrierung über der Haupttrageinrichtung (16) erfolgt.

2. Stapelausrüstung nach Anspruch 1, wobei die Aufnahmeeinrichtung (1) einen angetriebenen Förderer (2) aufweist, der dafür ausgebildet und angeordnet ist, aufeinanderfolgende Produkte zu empfangen, die auf ihn zu einer Partie zusammengesetzt werden sollen und von derselben durch die Übergabeeinrichtung (11, 12) an die Haupttrageinrichtung (16) abgegeben werden sollen.

3. Stapelausrüstung nach Anspruch 1 oder Anspruch 2, wobei die Sammeleinrichtung (2, 6, 7, 10) eine bewegliche Anschlagplatte (10) und einen Drehtisch (6) zum Einstellen der Winkelanordnung der Produkte aufweist.

4. Stapelausrüstung nach irgendeinem vorhergehenden Anspruch, mit einer Hilfstrageinrichtung (17) oberhalb der Haupttrageinrichtung (16) und Mechanismen, welche automatisch arbeiten, um jede Partie von Produkten von der Sammeleinrichtung (2, 6, 7, 10) an die Haupttrageinrichtung (16) und von dieser aus an die Hilfstrageinrichtung (17) unterhalb jeder auf letzterer bereits angeordneten Partie zu übergeben.

5. Stapelausrüstung nach Anspruch 4, wobei die Haupttrageinrichtung (16) und die Hilfstrageinrichtung (17) relativ zueinander vertikal bewegbar sind, um Partien von Produkten zwischen sich zu übergeben.

6. Stapelausrüstung nach Anspruch 4 oder Anspruch 5, wobei die Hilfstrageinrichtung (17) mehrere parallele, zurückziehbare Finger aufweist, die zum Einführen unter eine oder mehrere Partien, die auf der Haupttrageinrichtung (16) gehalten sind, und zum Darunterhervorziehen ausgebildet sind.

7. Stapelausrüstung nach Anspruch 6, wobei die Haupttrageinrichtung (16) ein Bett von parallelen Rollen aufweist und die zurückziehbaren Finger vertikal mit den Zwischenräumen zwischen den Rollen ausgerüstet sind.

8. Stapelausrüstung nach irgendeinem vorhergehenden Anspruch, mit einem Palettenspender (30), der neben der Haupttrageinrichtung (16) angeordnet und dafür ausgebildet ist, ein Magazin für einen Stapel von Paletten zu bilden, und eine Einrichtung (33) aufweist zum aufeinanderfolgenden Abgeben von Paletten aus dem Magazin an die Haupttrageinrichtung (16) zum Plazieren unterhalb eines fertigen Stapels von Produkten.

9. Stapelausrüstung nach Anspruch 8, wobei der Palettenspender (30) vertikale Teile (35) aufweist zum Abstützen von entgegengesetzten Seiten eines Stapels von Paletten und die Fördereinrichtung (33) zum Übergeben der untersten Palette von unterhalb eines Stapels derselben aus an die Haupttrageinrichtung (16), während der Stapel von Paletten darüber durch die vertikalen Teile gehalten ist.

10. Stapelausrüstung nach irgendeinem vorhergehenden Anspruch, mit einem Verbindungsblattspender (20), der eine Einrichtung aufweist zum Tragen eines Stapels von Verbindungsblättern (22) und eine Einrichtung (25) zum Abgeben eines Blattes aus dem Stapel auf die obere Oberfläche einer zusammengesetzten Partie von Produkten vor deren Übergabe an die Haupttrageinrichtung (16), wodurch zwischen vertikal benachbarten Partien von Produkten innerhalb des Stapels jeweils ein Verbindungsblatt angeordnet wird.

11. Stapelausrüstung nach Anspruch 10, wobei der Verbindungsblattspender (20) ein einstellbares Steuergatter (23) aufweist, um sicherzustellen, daß die Blätter eines nach dem anderen aus dem Spender abgegeben werden.

12. Stapelausrüstung nach irgendeinem vorhergehenden Anspruch, mit mehreren Detektoren zum Bestimmen der augenblicklichen Position eines Produkts oder einer Partie desselben innerhalb der Ausrüstung und mit einer Computersteuereinheit (112), die so angeschlossen ist, daß sie Signale aus den Detektoren empfängt und gemäß einer vorbestimmten Zeitfolge verschiedene Antriebsmechanismen für die Komponenten der Ausrüstung betätigt, so daß der gewünschte Betrieb der Ausrüstung gewählt und automatisch gesteuert werden kann.

## Revendications

1. Dispositif d'empilage comprenant des moyens de réception (1) pour recevoir et convoyer des produits devant être empilés, des moyens de collecte (2, 6, 7, 10) pour collecter lesdits produits convoyés en les réunissant selon une disposition prédéterminée sous la forme de lots successifs, des moyens de support principaux (16) pour supporter de tels lots en un emplacement d'empilage, et des moyens de transfert (11, 12) pour transférer lesdits lots depuis lesdits moyens de collecte (2, 6, 7, 10) auxdits moyens de support principaux (16) et pour introduire chaque lot successif au-dessous d'un lot précédent transféré, ce qui a pour effet qu'une pile desdits lots est formée sur lesdits moyens de support principaux (16), caractérisé en ce que lesdits moyens de collecte (2, 6, 7, 10) comprennent au moins deux éléments déviateurs (8) pouvant être simultanément rapprochés et écartés l'un de l'autre transversalement à la direction de convoyage des produits pour centrer la disposition transversale d'un lot réuni de produits avant son transfert auxdits moyens de support principaux (16); et en ce que des structures (18) disposées verticalement sont prévues au-dessus des moyens de support principaux (16) et peuvent être simultanément rapprochées et écartées les unes des autres dans une direction parallèle à la direction de convoyage des produits pour centrer la disposition longitudinale des lots empilés, sur lesdits moyens de support principaux (16) de sorte qu'un centrage transversal s'effectue au-dessus des moyens de collecte, et qu'un cantrage longitudinal s'effectue au-dessus des moyens de support principaux (16).

2. Dispositif d'empilage selon la revendication 1, dans lequel les moyens de réception (1) comprennent un convoyeur entraîné (2) adapté et agencé pour recevoir des produits successifs devant être assemblés sur des moyens sous la forme d'un lot et à partir duquel les produits sont transférés par lesdits moyens de transfert (11, 12), sur lesdits moyens de support principaux (16).

3. Dispositif d'empilage selon la revendication 1 ou 2, dans lequel lesdits moyens de collecte (2, 6, 7, 10) comprennent une plaque d'arrêt mobile (10) et un plateau rotatif (6) pour régler la disposition angulaire des produits.

4. Dispositif d'empilage selon l'une quelconque des revendications précédentes, comprenant des moyens de support auxiliaires (17) situés au-dessus desdits moyens de support principaux (16), et des mécanismes, qui agissent automatiquement pour transférer chaque lot de produits depuis les moyens de collecte (2, 6 7, 10) aux moyens de support principaux (16) et, à partir de là, aux moyens de support auxiliaires (17) au-dessous d'un lot déjà disposé sur des moyens.

5. Dispositif d'empilage selon la revendication 4, dans lequel les moyens de support principaux (16) et les moyens de support auxiliaires (17) sont déplaçables verticalement les uns par rapport aux autres pour transférer entre eux des lots de produits.

6. Dispositif d'empilage selon la revendication 4 ou 5, dans lequel les moyens de support auxiliaires (17) comprennent une pluralité de doigts parallèles rétractables adaptés pour réaliser une insertion au-dessous d'un ou de plusieurs lots supportés par les moyens de support principaux (16) et un retrait à partir du dessous de ce ou ces lots.

7. Dispositif d'empilage selon la revendication 6, dans lequel les moyens de support principaux (16) comprennent une table formée de rouleaux parallèles, et les doigts rétractables sont alignés verticalement avec les espaces situés entre les rouleaux.

8. Dispositif d'empilage selon l'une quelconque des revendications précédentes, comprenant un distributeur de palettes (30) disposé au voisinage des moyens de support principaux (16) et apte à former un magasin pour une pile de palettes, et comprenant des moyens (33) pour délivrer des palettes successivement depuis ledit magasin auxdits moyens de support principaux (16) pour leur mise en place au-dessous d'une pile finale de produits.

9. Dispositif d'empilage selon la revendication 8, dans lequel ledit distributeur de palettes (30) comprend des éléments verticaux (35) servant à réaliser un support sur des côtés opposés respectifs d'une pile de palettes, et lesdits moyens de délivrance (33) transfèrent la palette la plus bassé depuis le dessous d'une pile de palettes, sur lesdits moyens de support principaux (16), tandis que la pile de palettes, située au-dessus, est supportée par lesdits éléments verticaux,

10. Dispositif d'empilage selon l'une quelconque des revendications précédentes, comprenant un distributeur de feuilles de liaison (20) comprenant des moyens pour supporter une pile de feuilles de liaison (22) et des moyens (25) pour distribuer une feuille à partir de la pile en l'amenant sur la surface supérieure d'un lot assemblé de produits avant son transfert sur lesdits moyens de support principaux (16), une feuille de liaison étant intercalée entre des lots successifs de produits, adjacents verticalement, à l'intérieur de la pile de produits.

11. Dispositif d'empilage selon la revendication 10, dans lequel le distributeur de feuille de liaison (20) comprend une porte de commande réglable (23) garantissant que lesdites feuilles sont délivrées une par une par le distributeur.

12. Dispositif d'empilage selon l'une quelconque des revendications précédentes, comprenant une pluralité de détecteurs pour déterminer la position instantanée d'un produit ou d'un lot de produits à l'intérieur du dispositif, et une unité de commande à ordinateur (112) raccordée de manière à recevoir des signaux de la part desdits détecteurs et à actionner, en fonction d'une séquence temporelle prédéterminée, différents mécanismes d'entraînement pour les composants du dispositif de sorte que le fonctionnement désiré du dispositif peut être sélectionné et commandé de façon automatique.
